# EUROPÄISCHE PATENTSCHRIFT

(11) **EP 0 824 389 B1**
(45) Veröffentlichungstag und Bekanntmachung des Hinweises auf die Patenterteilung: **04.08.1999**
(21) Anmeldenummer: 96916041.5
(22) Anmeldetag: 10.05.1996
(51) Int. Cl.: B23H 1/00, B23H 7/26, B23Q 7/04, B23H 11/00

(54) **EINRICHTUNG ZUM FUNKENEROSIVEN BEARBEITEN VON WERKSTÜCKEN**
DEVICE FOR USE IN ELECTRICAL DISCHARGE MACHINING OF WORK PIECES
DISPOSITIF POUR L'USINAGE PAR ETINCELAGE DE PIECES

(30) Priorität: 12.05.1995 DE 19517548
(43) Veröffentlichungstag der Anmeldung: 25.02.1998
(73) Patentinhaber: VOLLMER WERKE MASCHINENFABRIK GMBH, D-88400 Biberach (DE)
(72) Erfinder: BECK, Ernst, D-88437 Maselheim (DE); BAILER, Norbert, D-88433 Schemmerhofen (DE); LENARD, Peter, D-88400 Biberach (DE)
(74) Vertreter: Goetz, Rupert, Dipl.-Ing.
(86) Internationale Anmeldenummer: EP9602018
(87) Internationale Veröffentlichungsnummer: WO9635544

(56) Entgegenhaltungen:
- DE-A- 3 826 251
- DE-C- 4 330 885
- US-A- 5 309 368

## Beschreibung

Die Erfindung betrifft eine Einrichtung zum funkenerosiven Bearbeiten von Werkstücken mit
- einer Erodiermaschine, in deren Arbeitsraum ein Werkstückhalter und ein Schlitten mit einem Werkzeugträger längs mindestens der drei Achsen eines räumlichen Koordinatensystems in bezug zueinander gesteuert bewegbar sind, wobei eine dieser Achsen eine zur Achse des Werkstückhalters parallele Bewegungsachse des Schlittens ist,
- einem Magazin, das in den Arbeitsraum hineinbewegbare Werkstückaufnahmen aufweist, von denen mindestens eine in einer Übergabeposition stehende Werkstückaufnahme achsparallel zu der genannten Bewegungsachse des Schlittens angeordnet ist, und
- einem Greifer zum Austauschen von Werkstücken zwischen dem Magazin und dem Werkstückhalter.

Bei einer bekannten Einrichtung dieser Gattung (DE 43 30 885 C1) weist das Magazin zwei gleichachsig übereinander angeordnete Drehteller auf, von denen der untere mehrere Paletten mit je einem Werkstück aufnimmt, während der obere Drehteller Elektroden aufnimmt und zusätzlich eine Ablageposition für einen Transportgreifer aufweist. Der Werkzeugträger trägt ein Spannfutter, in das sich wahlweise eine Elektrode oder der Transportgreifer einspannen läßt. Wenn ein bearbeitetes Werkstück gegen ein zu bearbeitendes ausgetauscht werden soll, wird der Schlitten mit dem Werkzeugträger aus dessen Bearbeitungsposition in eine Übergabeposition gebracht, in welcher das Spannfutter des Werkzeugträgers über einem freien Platz des oberen Drehtellers steht. Sodann wird das Spannfutter geöffnet und die bisher von ihm eingespannte Elektrode auf dem oberen Drehteller abgesetzt. Anschließend wird dieser weitergeschaltet, so daß der an ihm abgelegte Transportgreifer in die Übergabeposition gelangt. Der Werkzeugträger erfaßt nun mit seinem Spannfutter den Transportgreifer und dann fährt der Schlitten samt Werkzeugträger und Transportgreifer in die Bearbeitungsposition zurück, wo der Transportgreifer das fertig bearbeitete Werkstück erfaßt. Daraufhin fährt der Schlitten wieder zum Magazin, wo der Transportgreifer das bearbeitete Werkstück auf einem freien Platz des unteren Drehtellers absetzt. Dann wird dieser weitergeschaltet, wodurch ein unbearbeitetes Werkstück dem Transportgreifer zugeführt und von ihm erfaßt wird. Durch erneute Bewegung des Schlittens wird das unbearbeitete Werkstück in die Bearbeitungsposition gebracht, auf dem Werkstückhalter abgesetzt und von diesem gespannt. Der Schlitten samt Spannfutter und Transportgreifer fährt daraufhin erneut zum Magazin, wo das Spannfutter den Transportgreifer absetzt und an seiner Stelle eine Elektrode erfaßt. Schließlich kehrt der Schlitten mit dem Werkzeugträger und der in dessen Spannfutter eingespannten Elektrode erneut in die Bearbeitungsposition zurück, und erst dann kann die Bearbeitung des dort wartenden Werkstücks beginnen.

Es ist ferner eine CNC-Drehmaschine bekannt (US-A-5,309,368), bei der auf einem Maschinenbett ein Spindelstock und eine Längsführung angeordnet sind. Im Spindelstock ist eine Arbeitsspindel, die ein Spannfutter trägt, um eine zur Längsführung parallele Spindelachse drehantreibbar gelagert. Entlang der Längsführung ist ein erster Schlitten verschiebbar geführt, und auf diesem ist eine Querführung ausgebildet, auf der ein zweiter Schlitten verschiebbar geführt ist. Auf dem zweiten Schlitten sind eine Schneidvorrichtung zum Bearbeiten eines im Spannfutter gespannten Werkstücks sowie, seitlich neben dieser Schneidvorrichtung, eine Handhabungsvorrichtung für Werkstücke angeordnet. Vom Spindelstock aus gesehen jenseits des zweiten Schlittens ist auf einem vom Maschinenbett getrennten Sockel ein Magazin um eine senkrechte Achse drehbar sowie heb- und senkbar gelagert. Das Magazin ist zum Aufnehmen einer Vielzahl Werkstücke ausgebildet. Die Handhabungsvorrichtung weist einen Arm auf, der auf dem zweiten Schlitten um eine zur Querführung parallele erste Achse schwenkbar gelagert ist und an seinem von dieser ersten Achse entfernten Ende einen Greifer trägt, der in bezug auf den Arm um eine zur ersten Achse parallele zweite Achse schwenkbar ist. Um ein Werkstück vom Magazin zu entnehmen, werden der Arm und der Greifer in eine vom Spindelstock wegweisende waagerechte Lage nach hinten geschwenkt und das Magazin wird derart angehoben, daß der Greifer ihm ein Werkstück entnehmen kann. Sodann wird der Arm um 180° nach vorne geschwenkt und der Greifer wird um 90° nach unten geschwenkt, wodurch das Werkstück in eine Lage gelangt, in der es durch Verfahren des ersten Schlittens in das Spannfutter eingeführt und in diesem gespannt werden kann. Damit dieses Werkstück anschließend von der Schneidvorrichtung bearbeitet werden kann, ohne daß der Arm oder der an ihm gelagerte Greifer mit dem Spannfutter oder dem Spindelstock kollidieren kann, muß der Arm aus seiner dem Spindelstock zugewandten Stellung weggeschwenkt werden. Nach Bearbeitung des Werkstücks wird der Arm wieder in Richtung zum Spindelstock hin geschwenkt, um das Werkstück abzuholen und es nach einer erneuten Schwenkung um 180° auf dem Magazin abzusetzen und dann das nächste unbearbeitete Werkstück von dort abzuholen. All diese Bewegungen der Handhabungsvorrichtung setzen eine aufwendige Steuerung voraus und führen zu Zeitverlusten.

Der Erfindung liegt die Aufgabe zugrunde, eine Einrichtung zum funkenerosiven Bearbeiten von Werkstücken derart weiterzubilden, daß sie eine weniger aufwendige Handhabung beim Werkstückwechsel ermöglicht.

Die Aufgabe ist erfindungsgemäß ausgehend von einer Einrichtung der eingangs beschriebenen Gattung dadurch gelöst, daß
- der Greifer in einem festen Abstand vom Werkzeugträger ständig am Schlitten angeordnet ist und
- dem Greifer eine Anordnung zugeordnet ist, die bestrebt ist, ihn ständig in einer Normalstellung an dem Schlitten zu halten, aus der er, gegen elastischen Widerstand, nur längs seiner zur genannten Bewegungsachse des Schlittens parallelen Achse auslenkbar ist.

Damit wird erreicht, daß der Greifer jeweils nach Bearbeitung eines Werkstücks sofort einsatzbereit ist, um das bearbeitete Werkstück im Magazin abzusetzen und von dort ein unbearbeitetes Werkstück zum Werkstückhalter zu transportieren. Anschließend kann der Werkzeugträger sofort für die Werkstückbearbeitung eingesetzt werden.

Bei einer bevorzugten Ausführungsform der Erfindung ist der Schlitten längs zweier Achsen, und der Werkstückhalter längs der dritten Achse des räumlichen Koordinatensystems bewegbar. Diese Aufteilung der Bewegungen trägt zusätzlich dazu bei, die für den Werkstücktransport erforderlichen Nebenzeiten zu vermindern.

Weitere vorteilhafte Ausgestaltungen der Erfindung sind Gegenstand der Ansprüche 3 bis 10.

Im Sinne dieser Erfindung sollen unter Werkstücken in erster Linie solche verstanden werden, die mit Schneidplättchen oder -einsätzen aus polykristallinem Diamant (PKD) oder aus Hartmetall versehen sind, beispielsweise Fräser, Bohrer, Sägeblätter und dgl. Unter Werkzeug einer Erodiermaschine ist eine Elektrode zu verstehen, die in bekannter Weise z.B. von einem Elektrodendraht oder einer rotierenden Elektrodenscheibe gebildet sein kann.

Ausführungsbeispiele der Erfindung werden im folgenden anhand schematischer Zeichnungen mit weiteren Einzelheiten erläutert: Es zeigen:
Fig. 1 eine Schrägansicht einer erfindungsgemäßen Einrichtung,
Fig. 2 die Vorderansicht in Richtung des Pfeils II in Fig.1,
Fig. 3 die Draufsicht des in Fig.2 rechten Teils der Einrichtung, in größerem Maßstab,
Fig. 4 die Draufsicht wie in Fig.3, jedoch in einer anderen Arbeitsstellung,
Fig. 5 die Draufsicht in einer weiteren Arbeitsstellung,
Fig. 6 den Schnitt VI-VI in Fig.4, weiter vergrößert,
Fig. 7 eine Alternative zu Fig.6,
Fig. 8 eine Alternative zu Fig.2,
Fig. 9 einen vergrößerten Ausschnitt aus Fig.2 oder Fig.8,
Fig.10 die Seitenansicht in Richtung des Pfeils X in Fig.9 und
Fig.11 die zugehörige, teilweise als Schnitt XI-XI in Fig.10 gezeichnete Draufsicht.

Zu der dargestellten Einrichtung gehört eine Erodiermaschine 10 mit einem Maschinengestell 12, an dem längs einer senkrechten Z-Führung 14 ein Z-Schlitten 16 numerisch gesteuert verschiebbar ist. Der Z-Schlitten 16 hat einen Aufsatz 18, der um eine senkrechte Achse C dreheinstellbar und feststellbar ist und einen Werkstückhalter 20 trägt. Dieser ist in der Art eines bekannten Spannfutters gestaltet und mittels eines numerisch gesteuerten Antriebs 22 um eine waagerechte Achse A drehantreibbar.

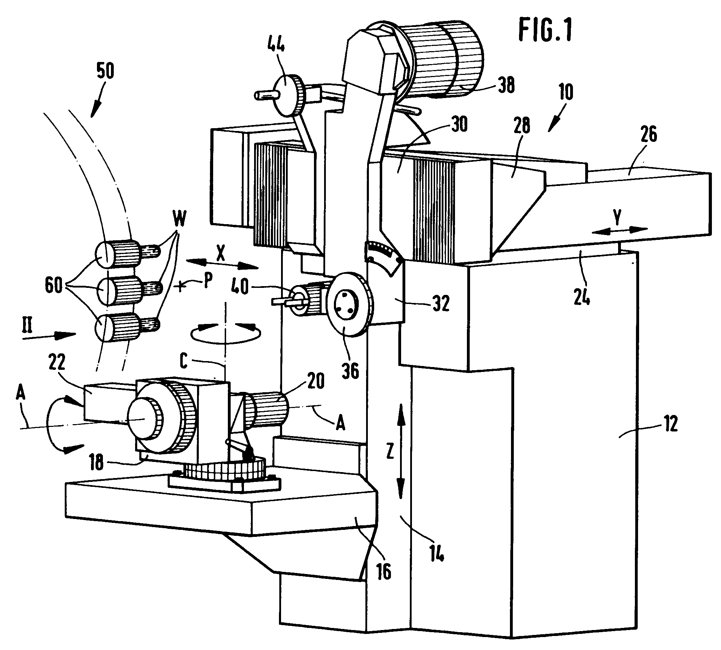

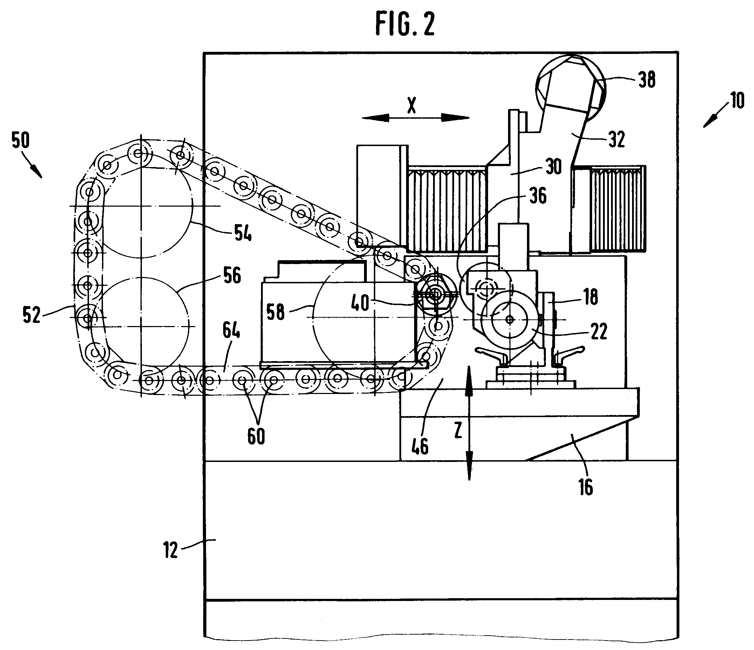

Am Maschinengestell 12 ist ferner eine waagerechte Y-Führung 24 ausgebildet, auf der ein Y-Schlitten 26 numerisch gesteuert verschiebbar ist. In der abgebildeten Einstellung des Aufsatzes 18 erstreckt sich die Achse A des Werkstückhalters 20 parallel zur Y-Führung 24. Am Y-Schlitten 26 ist normal zur Z-Führung 14 und zur Y-Führung 24, also ebenfalls waagerecht, eine X-Führung 28 ausgebildet, längs der ein X-Schlitten 30 numerisch gesteuert verschiebbar ist. Am X-Schlitten 30 ist ein Werkzeugträger 32 einstellbar befestigt, und in diesem ist eine Erodierspindel 34 gelagert, an deren dem Betrachter der Fig.1 und 2 zugewandten Ende eine Elektrodenscheibe 36 auswechselbar befestigt ist. Zum Antreiben der Erodierspindel 34 ist am Werkzeugträger 32 ein Motor 38 befestigt.

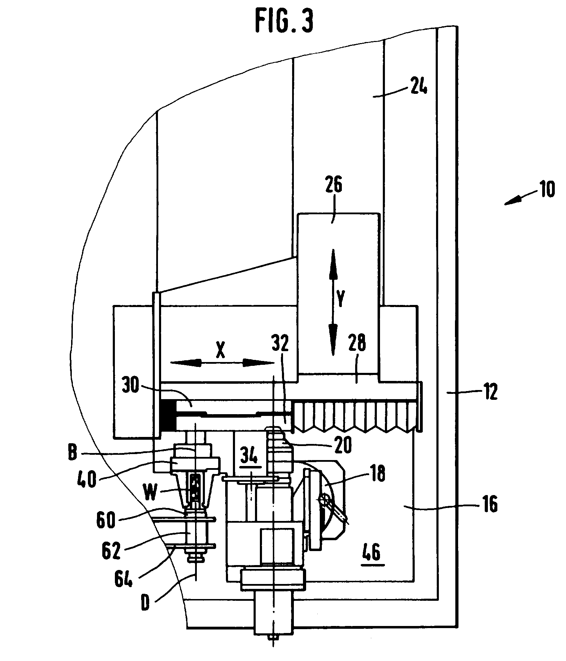

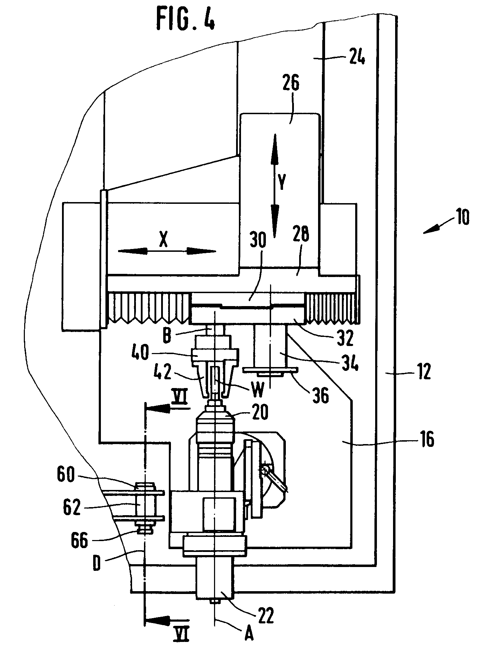

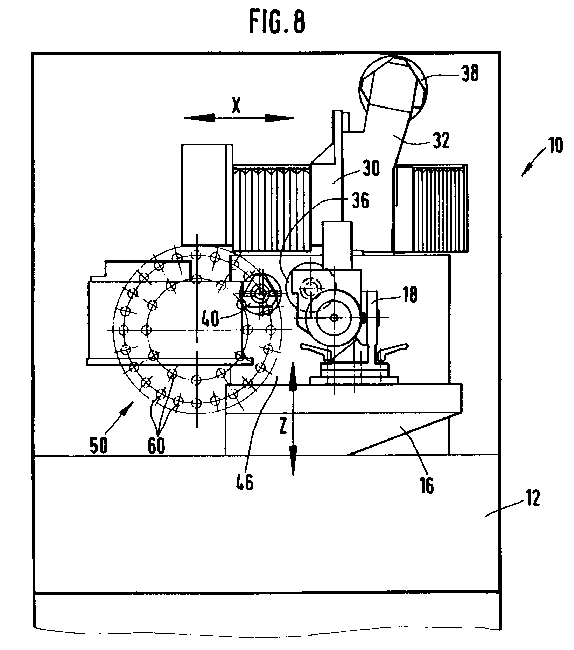

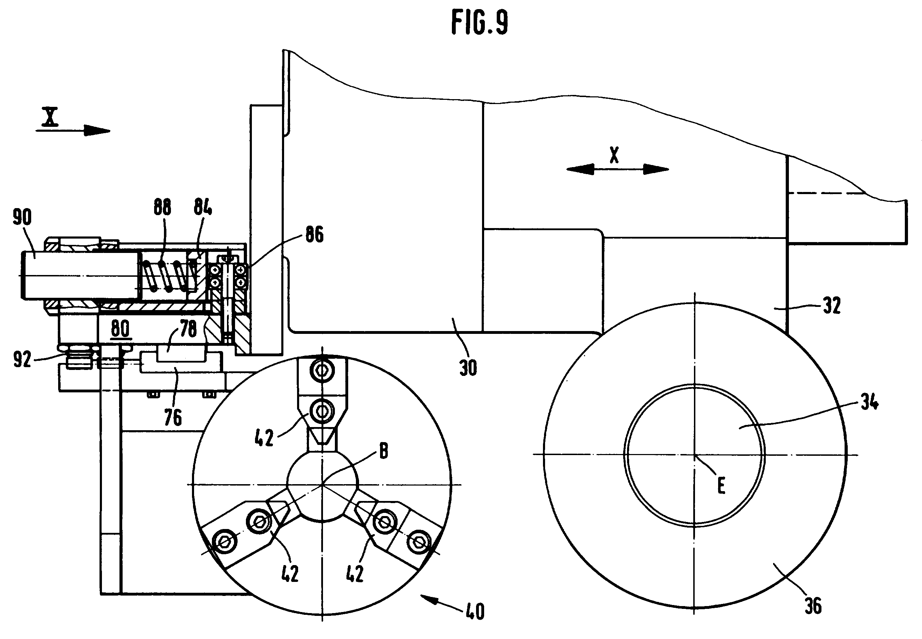

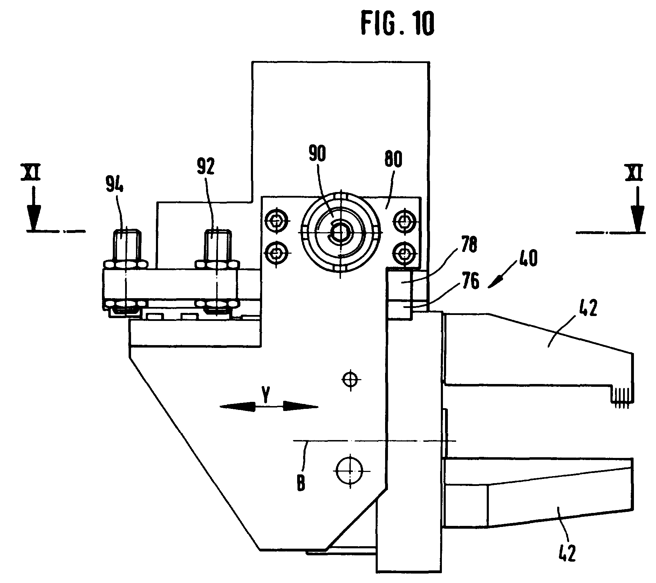

Am X-Schlitten 30 ist in einem festen Abstand von der Elektrodenscheibe 36 ein Greifer 40 angeordnet, der mehrere Finger 42 aufweist. In Fig.1 und Fig.2 bis 5 ist der Greifer 40 der Einfachheit halber mit zwei Fingern gezeichnet; für viele Anwendungsfälle ist es jedoch vorteilhaft, wenn der Greifer 40 drei Finger 42 hat, wie in Fig.2 und 8 angedeutet und in Fig.9 bis 11 näher dargestellt. Die Finger 42 sind symmetrisch in Bezug auf eine waagerechte, zur Y-Achse parallele Achse B angeordnet und zum Öffnen und Schließen des Greifers 40 hydraulisch von der Achse B weg bzw. zu ihr hin bewegbar. Sicherheitshalber sind die Finger 42 zusätzlich durch Federkraft in Richtung zur Achse B hin vorgespannt.

In Fig.1 ist ferner ein Handrad 44 erkennbar, mit dem sich der Werkzeugträger 32 neigen läßt, um die Elektrodenscheibe 36 entsprechend der von ihr auszuführenden Bearbeitung schrägzustellen. Der gesamte von der Elektrodenscheibe 36 und vom Greifer 40 durch Bewegungen des Y-Schlittens 26 und des X-Schlittens 30 erreichbare Raum wird im folgenden als Arbeitsraum 46 bezeichnet.

Der Erodiermaschine 10 ist zum Speichern von Werkstücken W ein Magazin 50 zugeordnet, das im Bereich einer Übergabeposition P in den Arbeitsraum 46 hineinragt. Gemäß Fig.1 bis 7 weist das Magazin 50 eine Gall'sche Kette 52 auf, die über Umlenkräder 54 und 56 sowie ein Antriebsrad 58 läuft. Gemäß Fig.8 weist das Magazin 50 eine kreisförmige Scheibenanordnung auf. In jedem Fall enthält das Magazin 50 eine Vielzahl von beispielsweise dreißig Werkstückaufnahmen 60. Bei dem Kettenmagazin sind die Werkstückaufnahmen 60 in je einem Gelenk 62 zwischen zwei Kettengliedern 64 auswechselbar gehalten. Bei dem Scheibenmagazin sind die Werkstückaufnahmen 60, ebenfalls auswechselbar, in je einer achsparallelen Bohrung gehalten; gemäß Fig.8 sind zwei konzentrische kreisförmige Reihen solcher Bohrungen derart angeordnet, daß je zwei von ihnen ihre Mittelpunkte auf einem gemeinsamen Radius der Scheibe liegen haben. In jedem Fall hat jede der Werkstückaufnahmen 60 eine zur Y-Achse parallele Achse D.

Jedes der beiden dargestellten Magazine 50 ist schrittweise derart antreibbar, daß jeweils eine der Werkstückaufnahmen 60 eine Stellung einnimmt, in der ihre Achse D in der Übergabeposition P liegt. Jede der Werkstückaufnahmen 60 ist dazu ausgebildet, ein Werkstück W aufzunehmen und weist einen einstellbaren Anschlag 66 auf, beispielsweise eine rückwärtig eingeschraubte Schraube, um die Eindringtiefe des Werkstücks W zu begrenzen.

Unabhängig davon, ob das Magazin 50 ein Ketten- oder Scheibenmagazin ist, lassen sich die Werkstückaufnahmen 60 an Werkstücke W unterschiedlicher Art und Größe durch auswechselbare

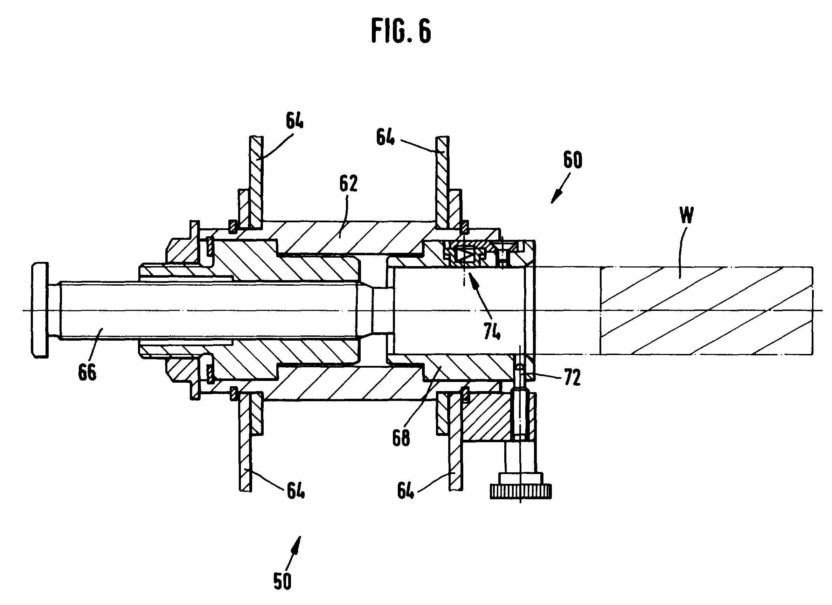

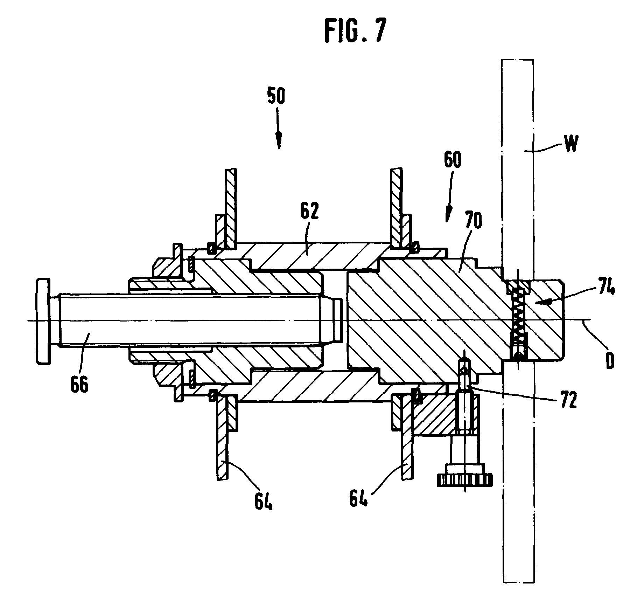

Einsätze anpassen, die gemäß Fig.6 eine Hülse 68 oder gemäß Fig.7 ein Dorn 70 sein kann und in beiden Fällen gegen Drehen und Herausfallen gesichert ist. Als Sicherung dient in den dargestellten Beispielen je ein Raststift 72 üblicher Art, der radial nach innen vorgespannt ist. Gemäß Fig.6 ist in die Hülse 68 der Schaft eines Werkstücks W, beispielsweise eines Fräsers, bis zum Anschlag 66 eingesteckt. Gemäß Fig.7 ist auf den Dorn 70 ein mit einer zentralen Bohrung versehenes Werkstück W, beispielsweise ein Sägeblatt, aufgesteckt. In beiden Fällen ist das Werkstück W durch eine federnd radial nach innen (Fig.6) bzw. radial nach außen (Fig.7) vorgespannte Klemmvorrichtung 74 reibschlüssig festgehalten.

In Fig.9 bis 11 ist eine bevorzugte Ausführungsform des Greifers 40 näher dargestellt. In dieser Ausführungsform hat der Greifer 40, insoweit einem herkömmlichen Dreibackenfutter vergleichbar, drei Finger 42, die in gleichen Abständen von 120° gegeneinander versetzt rings um die Greiferachse B angeordnet sind. Der Greifer 40 ist längs seiner Achse B in beiden Richtungen gegen elastischen Widerstand aus seiner abgebildeten Normalstellung auslenkbar. Zu diesem Zweck ist der Greifer 40 auf einem Greiferschlitten 76 angeordnet, der auf einer zu den Achsen B und Y parallelen Längsführung 78 verschiebbar ist. Auf der Längsführung 78 ist eine zur Achse X parallele Querführung 80 ausgebildet, an der ein Querschlitten 82 geführt ist. Der Querschlitten 82 weist eine muldenförmige Rampenanordnung 84 auf und stützt sich mit dieser an einer Rolle 86 ab, die um eine zur X-Y Ebene normale Achse drehbar am Greiferschlitten 76 gelagert ist. Der Querschlitten 82 steht unter der Vorspannung einer Feder 88, im dargestellten Beispiel einer wendelförmigen Schraubenfeder, die sich an einem in die Querführung 80 parallel zur X-Achse eingeschraubten, einstellbaren Gewindebolzen 90 abstützt.

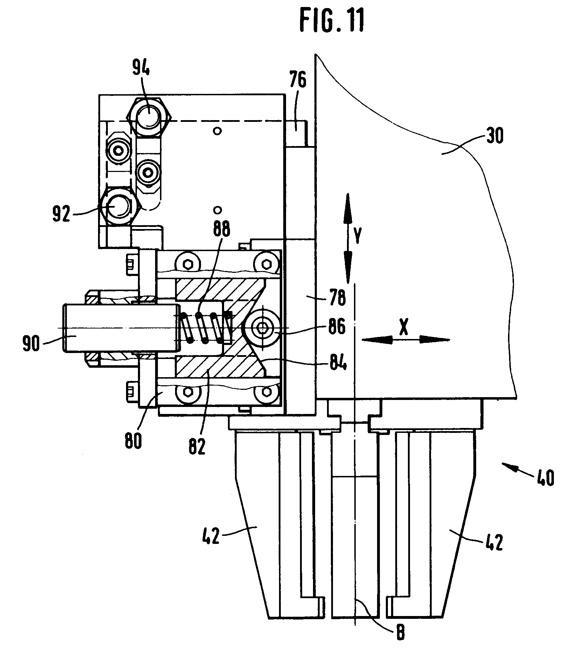

Diese Anordnung ist bestrebt, den Greifer 40 ständig in seiner abgebildeten Normalstellung zu halten, in der die Rolle 86 gemäß Fig.11 im tiefsten Bereich der muldenförmigen Rampenanordnung 84 des Querschlittens 82 anliegt. Auslenkungen des Greifers 40 in der einen oder anderen Richtung längs seiner Achse B werden von je einem Endschalter 92 bzw. 94 überwacht, die bei einer bestimmten Auslenkung mindestens den Antrieb für den Y-Schlitten 26 abschalten. Auf diese Weise werden Schäden vermieden, die andernfalls entstehen könnten, wenn der Greifer 40 beispielsweise beim Einsetzen eines Werkstücks W in den Werkstückhalter 20 oder beim Herausziehen eines Werkstücks aus dem Magazin 50 auf einen Widerstand stößt, der die Folge einer Fehlausrichtung oder Verklemmung sein kann.

Fig.9 bis 11 zeigen also, daß der Greifer 40 mit dem X-Schlitten 30 vorzugsweise nicht völlig starr verbunden ist. Es ist auch möglich, die Finger 42 oder den Greifer 40 als Ganzes auszuwechseln, um ihn an Werkstücke W anzupassen, die erheblich größer oder kleiner sind als die dargestellten. Dennoch bleibt die Tatsache bestehen, daß der Greifer 40 dem X-Schlitten 30 bei einer bestimmten Ausstattung der Erodiermaschine 10 und des Magazins 50 dauerhaft zugeordnet und ohne Zeitverlust einsetzbar ist. Andererseits kann die Erodiermaschine 10 mit einem Erodierwerkzeug, beispielsweise der dargestellten Elektrodenscheibe 36, sofort zu arbeiten beginnen, wenn der Greifer 40 ein zu bearbeitendes Werkstück W an den Werkstückhalter 20 übergeben hat und der Werkzeugträger 32 durch eine Bewegung des X-Schlittens 30, und der Werkstückhalter 20 durch eine vorzugsweise gleichzeitig stattfindende Bewegung des Z-Schlittens 16 in bezug zueinander in Arbeitsstellung gebracht worden sind. Diese Bewegungen können verhältnismäßig kurz sein; der Abstand zwischen der Achse B des Greifers 40 und der in Fig.9 mit E bezeichneten Achse der Erodierspindel 34 ist nur so groß, daß sich Kollisionen zuverlässig vermeiden lassen.

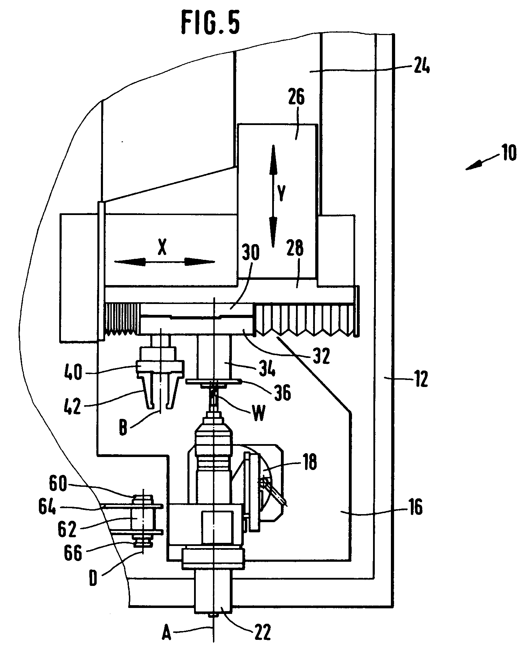

Die beschriebene Einrichtung arbeitet folgendermaßen: Gemäß Fig.1 bis 3 nimmt der X-Schlitten 30 eine Stellung ein, in welcher die Achse B des Greifers 40 in der Übergabeposition P liegt. Durch Verschieben des Y-Schlittens 26 wird nun der Greifer 40 in geöffnetem Zustand zu dem vor ihm im Magazin 50 stehenden Werkstück W bewegt. Dieses Werkstück W wird durch Schließen des Greifers 40 erfaßt und aus der zugehörigen Werkstückaufnahme 60 des Magazins 50 herausgezogen, indem der Y-Schlitten 26 rückwärts bewegt wird. Sodann werden der Greifer 40 durch Verschieben des X-Schlittens 30, und der Werkstückhalter 20 durch Verschieben des Z-Schlittens 16, in Fluchtung miteinander gebracht und anschließend wird durch erneutes Verschieben des Y-Schlittens nach vorne das Werkstück W in den Werkstückhalter 20 eingesetzt und in diesem gespannt, woraufhin der Greifer 40 geöffnet wird, so daß er das Werkstück W freigibt. Schließlich wird die Elektrodenscheibe 36 gemäß Fig.5 in Arbeitsstellung gebracht, um das Werkstück W zu bearbeiten. Nach der Bearbeitung wird das Werkstück W in die Werkstückaufnahme 60 zuruckgebracht und das Magazin 50 um einen Schritt weiterbewegt, so daß die nächste Werkstückaufnahme 60 mit einem zu bearbeitenden Werkstück in die Übergabeposition P gelangt.

## Patentansprüche

1. Einrichtung zum funkenerosiven Bearbeiten von Werkstücken (W) mit
- einer Erodiermaschine (10), in deren Arbeitsraum (46) ein Werkstückhalter (20) und ein Schlitten (30) mit einem Werkzeugträger (32) längs mindestens der drei Achsen eines räumlichen Koordinatensystems (X,Y,Z) in bezug zueinander gesteuert bewegbar sind, wobei eine dieser Achsen eine zur Achse (A) des Werkstückhalters (20) parallele Bewegungsachse (Y) des Schlittens (30) ist,
- einem Magazin (50), das in den Arbeitsraum (46) hineinbewegbare Werkstückaufnahmen (60) aufweist, von denen mindestens eine in einer Übergabeposition (P) stehende Werkstückaufnahme achsparallel zu der genannten Bewegungsachse (Y) des Schlittens (30) angeordnet ist, und
- einem Greifer (40) zum Austauschen von Werkstücken (W) zwischen dem Magazin (50) und dem Werkstückhalter (20), dadurch gekennzeichnet, daß
- der Greifer (40) in einem festen Abstand vom Werkzeugträger (32) ständig am Schlitten (30) angeordnet ist und
- dem Greifer (40) eine Anordnung (84-90) zugeordnet ist, die bestrebt ist, ihn ständig in einer Normalstellung an dem Schlitten (30) zu halten, aus der er, gegen elastischen Widerstand, nur längs seiner zur genannten Bewegungsachse (Y) des Schlittens (30) parallelen Achse (B) auslenkbar ist.

2. Einrichtung nach Anspruch 1,
dadurch gekennzeichnet, daß der Schlitten (30) längs zweier Achsen (X,Y), und der Werkstückhalter (20) längs der dritten Achse (Z) des räumlichen Koordinatensystems (X,Y,Z) bewegbar ist.

3. Einrichtung nach Anspruch 1 oder 2,
dadurch gekennzeichnet, daß der Greifer (40) mit mindestens einem Endschalter (92,94) zusammenwirkt, der bei einer bestimmten Auslenkung des Greifers (40) aus seiner Normalstellung den Schlitten (30) stillsetzt.

4. Einrichtung nach einem der Ansprüche 1 bis 3,
dadurch gekennzeichnet, daß das Magazin (50) ein Ketten- oder Scheibenmagazin ist.

5. Einrichtung nach einem der Ansprüche 1 bis 4,
dadurch gekennzeichnet, daß die Werkstückaufnahmen (60) des Magazins (50) auswechselbar sind.

6. Einrichtung nach einem der Ansprüche 1 bis 5,
dadurch gekennzeichnet, daß die Werkstückaufnahmen (60) des Magazins (50) einstellbare Anschläge (66) aufweisen, welche die axiale Lage der Werkstücke (W) bestimmen.

7. Einrichtung nach einem der Ansprüche 1 bis 6,
dadurch gekennzeichnet, daß die Werkstückaufnahmen (60) je eine Hülse (68) zum Einstecken eines Werkstücks (W) aufweisen.

8. Einrichtung nach einem der Ansprüche 1 bis 6,
dadurch gekennzeichnet, daß die Werkstückaufnahmen (60) je einen Dorn (70) zum Aufstellen eines gelochten Werkstücks (W), insbesondere Sägeblattes, aufweisen.

9. Einrichtung nach einem der Ansprüche 1 bis 8,
dadurch gekennezeichnet, daß die Werkstückaufnahmen (60) je eine Klemmvorrichtung (74) zum Festklemmen des aufgenommenen Werkstücks (W) aufweisen.

10. Einrichtung nach einem der Ansprüche 1 bis 9,
dadurch gekennzeichnet, daß der Greifer (40) mindestens zwei Finger (42) aufweist, die hydraulisch gegen eine sie zueinander hin vorspannende Federkraft auseinanderbewegbar sind.

## Claims

1. A means for processing workpieces (W) by spark erosion, comprising
- an erosion machine (10) with a work space (46) in which a workpiece carrier (20) and a carriage (30) including a tool support (32) are movable in controlled fashion with respect to each other along at least the three axes of a three dimensional coordinate system (C,Y,Z), one of said axes being an axis of movement Y of the carrier (30) parallel to the axis A of the workpiece carrier (20),
- a magazine (50) comprising workpiece holds (60) which are movable into the work space (46) and at least one of which, located in a transfer position (P), is arranged with its axis parallel to said axis (Y) of the carriage (30) movement, and
- a gripper (40) for exchanging workpieces (W) between the magazine (50) and the workpiece carrier (20), characterized in that
- the gripper (40) is permanently arranged on the carriage (30), at a fixed spacing from the tool support (32), and
- the gripper is associated with an arrangement (84-90) that tends to keep it permanently in a normal position at the carriage (30) from which it can be deflected, against resilient resistance, only along its axis (B) parallel to the said axis of movement (Y) of the carriage (30).

2. The means as claimed in claim 1, characterized in that the carriage (30) is movable along two axes (X, Y) and the workpiece carrier (20) is movable along the third axis (Z) of the three dimensional coordinate system (X,Y,Z).

3. The means as claimed in claim 1 or 2, characterized in that the gripper (40) cooperates with at least one end switch (92, 94) which stops the carriage (30) when a certain deflection of the gripper (40) from its normal position is reached.

4. The means as claimed in one of claims 1 to 3,
characterized in that the magazine (50) is a chain or disc magazine.

5. The means as claimed in one of claims 1 to 4,
characterized in that the workpiece holds (60) of the magazine (50) are exchangeable.

6. The means as claimed in one of claims 1 to 5,
characterized in that the workpiece holds (60) of the magazine (50) comprise adjustable stops (66) to determine the axial position of the workpieces (W).

7. The means as claimed in one of claims 1 to 6,
characterized in that the workpiece holds (60) each comprise a sleeve (68) for insertion of a workpiece (W).

8. The means as claimed in one of claims 1 to 6,
characterized in that the workpiece holds (60) each comprise a mandrel (70) for donning of an apertured workpiece (W), especially a saw blade.

9. The means as claimed in any of claims 1 to 8,
characterized in that the workpiece holds (60) each comprise a clamping device (74) to secure the workpiece (W) taken up.

10. The means as claimed in one of claims 1 to 9,
characterized in that the gripper (40) comprises at least two fingers (42) which are movable hydraulically away from each other against spring pressure which biases them towards each other.

## Revendications

1. Dispositif pour l'usinage par étincelage de pièces à usiner (W) comprenant
- une machine à érosion (10) dans l'espace de travail de laquelle (46) un porte-pièce (20) et un chariot (30) pourvu d'un porte-outil (32) peuvent être déplacés de façon commandée l'un par rapport à l'autre suivant au moins les trois axes d'un système de coordonnées spatiales (X, Y, Z), un de ces axes étant un axe de déplacement (Y) du chariot (30) parallèle à l'axe (A) du porte-pièce (20),
- un magasin (50) qui présente des fixations de pièces à usiner (60) pouvant être introduites dans l'espace de travail (46), dont au moins une fixation de pièce à usiner est disposée, lorsqu'elle est dans une position de transfert (P), en parallélisme d'axe audit axe de déplacement (Y) du chariot (30), et
- un dispositif de saisie (40) servant à échanger des pièces à usiner (W) entre le magasin (50) et le porte-pièce (20), caractérisé en ce que
- le dispositif de saisie (40) est disposé en permanence sur le chariot (30) à une distance fixe du porte-outil (32) et
- le dispositif de saisie (40) est associé à un agencement (84-90) qui tend à le maintenir en permanence dans une position normale sur le chariot (30) qu'il ne peut quitter, à l'encontre d'une résistance élastique, que suivant son axe (B) parallèle audit axe de déplacement (Y) du chariot (30).

2. Dispositif selon la revendication 1,
caractérisé en ce que le chariot (30) peut être déplacé suivant deux axes (X, Y) et en ce que le porte-pièce (20) peut être déplacé suivant le troisième axe (Z) du système de coordonnées spatiales (X, Y, Z).

3. Dispositif selon la revendication 1 ou 2,
caractérisé en ce que le dispositif de saisie (40) coopère avec au moins un interrupteur de fin de course (92, 94) qui arrête le chariot (30) lorsque le dispositif de saisie (40) s'écarte d'une distance déterminée de sa position normale.

4. Dispositif selon l'une quelconque des revendications 1 à 3,
caractérisé en ce que le magasin (50) est un magasin à chaîne ou à disque.

5. Dispositif selon l'une quelconque des revendications 1 à 4,
caractérisé en ce que les fixations de pièces à usiner (60) du magasin (50) sont interchangeables.

6. Dispositif selon l'une quelconque des revendications 1 à 5,
caractérisé en ce que les fixations de pièces a usiner (60) du magasin (50) présentent des butées (66) réglables qui déterminent la position axiale de la pièce a usiner (W).

7. Dispositif selon l'une quelconque des revendications 1 à 6,
caractérisé en ce que les fixations de pièces à usiner (60) présentent chacune un manchon (68) pour y enfoncer une pièce a usiner (W).

8. Dispositif selon l'une quelconque des revendications 1 à 6,
caractérisé en ce que les fixations de pièces à usiner (60) présentent chacune un goujon (70) pour y monter une pièce à usiner (W) percée, en particulier une lame de scie.

9. Dispositif selon l'une quelconque des revendications 1 à 8,
caractérisé en ce que les fixations de pièces a usiner (60) présentent chacune un dispositif de serrage (74) pour bloquer la pièce reçue (W).

10. Dispositif selon l'une quelconque des revendications 1 à 9,
caractérisé en ce que le dispositif de saisie (40) présente au moins deux doigts (42) qui peuvent être éloignés hydrauliquement l'un de l'autre à l'encontre d'une force élastique les pressant en permanence l'un contre l'autre.
